# EUROPÄISCHE PATENTANMELDUNG

(11) **EP 0 577 852 A1**
(43) Veröffentlichungstag der Anmeldung: **12.01.1994**
(21) Anmeldenummer: 93914518.1
(22) Anmeldetag: 05.01.1993
(51) Int. Cl.: B23P 15/10

(54) **VERFAHREN ZUR OPTIMIERUNG DES PROFILS DER KOLBENSEITENFLAECHE UND DES MINIMALEN SPIELS ZWISCHEN DEM KOLBEN UND DEM ZYLINDER IM KALTEN ZUSTAND DES MOTORS**

(30) Priorität: 27.01.1992 RU 5031734
(71) Anmelder: AKTSIONERNOE OBSCHESTVO "PRONTIS", Moscow, 129164 (RU); NIKITIN, Jury Nikolaevich, Moskovskaya Oblast 14052 (RU); KOROTEEV, Sergei Valentinovich, Moskovskaya Oblast (RU); NIKITIN, Andrei Jurievich, Moscow (RU); LEONTIEV, Alexandr Gennadievich, Moskovskaya Oblast (RU); KRUTKO, Sergei Vladimirovich, Moscow (RU); ZAKHAROV, Sergei Mikhailovich, Moscow (RU); BOITSOV, Vyacheslav Alexeevich, Moscow (RU); SOLODVKHO, Oleg Alexandrovich, Moscow (RU)
(72) Erfinder: NIKITIN, Juri Nikolaevich, ul. Lorkha, d.8, Kv.1, Moskovskaya Oblast 14052 (RU); Koroteev, Sergei Valentinovich p/o Rzhavki-Vniipp,, Moskovskaya Oblast (RU); Leontiev, Alexander Gennadievich, Zhukovsky, Moskovskaya Oblast (RU); Krutko, Sergei Vladimirovich, Moscow (RU); Zakharov, Sergei Mikhailovich, Moscow (RU); Boitsov, Vyacheslav Alexeevich, Moscow (RU); Solodvkho, Oleg Alexandrovich, Moscow (RU); Nikitin, Andrei Jurievich, Moscow (RU)
(74) Vertreter: Sparing - Röhl - Henseler Patentanwälte
(86) Internationale Anmeldenummer: RU9300001
(87) Internationale Veröffentlichungsnummer: WO9314900

(57) **Zusammenfassung**

Die Erfindung betrifft das Gebiet des Motorenbaus, und genauer betrifft sie Trimmen und Modernisierung der Verbrennungsmotoren durch Vervollständigung der Schmierbedingungen und Optimierung der konstruktiven Parameter der Einzelteile der Kolben-Zylinder-Gruppe. Die Erfindung verfolgt die Aufgabe, die Wirtschaftlichkeit und die Umweltfreundlichkeit der Motoren zu verbessern, und zwar den Kraftstoffverbrauch, den Ölabbrand, den Lärmpegel und die Giftigkeit der Abgase zu verringern. Das Verfahren besteht in Messung bei vorgegebenen Motorbetriebsbedingungen der Ölfilmstärke zwischen den Seitenflächen des Kolbens und des Zylinders, des Zylinders und des Kolbenringes diskret in den Schnittebenen zwischen Haltezonen des Kolbenoberteils im äußeren Totpunkt und des Kolbenmantels im inneren Totpunkt. Es wird auch die Temperatur des Kolbenoberteils gemessen und die gemessenen Werte als charakteristischer Parameter verwendet. Die Abweichungen weren den Normalwerten gegenüber für den gegebenen Motortyp festgestellt. Bei Abweichen der gemessenen Werte wird zusätzlich die Lage der Kolbenringe verändert, wobei das Messen der Ölfilmstärke und der Kolbenkopftemperatur, das Vergleichen der Meß- und Normalwerte sowie Änderung des Profils der Kolbenseitenfläche und der Lage der Kolbenringe bis zum Erreichen der Ergebnisse durchgeführt werden, die den Normalwerten entsprechen.

## Beschreibung

Die vorliegende Erfindung betrifft das Gebiet des Motorbaus und genauer bezieht sie sich auf Fertigstellen und Modernisieren der Verbrennungskraftmaschinen durch Vervollständigung der Schmierbedingungen und Optimierung der konstruktiven Parameter der Bestandteile der Zylinder-Kolben-Gruppe.

Bekannt ist ein Verfahren zur Optimierung der Kolbenseitenfläche durch Übertragen des Profils eines Prototypkolbens, das sich durch Abrieb des Prototypkolbens in einem Motor innerhalb einer bestimmten Zeit ergibt (US-A-4 656 711).

Aber die Wirtschaftlichkeit, die Zuverlässigkeit und die ökologischen Daten einer Zylinder-Kolben-Gruppe sind nicht nur von der Form des Kolbenprofils, der Betriebskolben- und Zylinderdeformationen abhängig, sondern auch vom Spiel zwischen dem Kolben und dem Zylinder, der Lage und der Konstruktion der Kolbenringe. Diese Faktoren werden bei bekanntem Verfahren nicht berücksichtigt.

Ein Komplexparameter, der den Einfluß aller oben angeführten Faktoren auf den Betrieb der Kolben-Zylinder-Gruppe berücksichtigt, ist die Stärke des Ölfilms im Raum zwischen dem Zylinder und Kolben.

Der vorliegenden Erfindung liegt die Aufgabe zugrunde, den Brennstoffverbrauch, den Ölabbrand zu vermindern, den Geräuschpegel und die Giftigkeit der Abgase von Verbrennungskraftmaschinen herabzusetzen.

Die gestellte Aufgabe wird durch konsequente komplexe und dosierte Änderung des Profils der Kolbenseitenfläche (einschließlich der Form des Querschnitts), der Lage der Kolbenringe und des minimalen Spiels zwischen dem Kolben und dem Zylinder des Motors im kalten Zustand gelöst.

Im Verfahrensteil wird dies dadurch erreicht, daß beim Verfahren zum Optimieren des Profils der Kolbenseitenfläche und des minimalen Spiels zwischen dem Kolben und dem Zylinder im kalten Zustand des Motors durch Änderung des Profils der Kolbenseitenfläche beim Abweichen des charakteristischen Parameters der Kolben-Zylinder-Gruppe vom vorgegebenen Wert die Stärke des Ölfilms zwischen den Seitenflächen des Kolbens und des Zylinders, des Zylinders und des Kolbenringes in Schnittebenen zwischen der Haltezone des Kolbens im oberen Totpunkt und dem Kolbenmantel im inneren Totpunkt bei vorgegebenen Betriebsbedingungen diskret gemessen wird. Es wird die Temperatur des Kolbenkopfes gemessen, und die gemessenen Werte werden als der charakteristische Parameter benutzt. Die Abweichungen werden in bezug auf die Normalwerte für den genommenen Motortyp bestimmt.

Zusätzlich bei Abweichen der Meßwerte wird die Lage der Kolbenringe geändert, wobei die Messung der Ölfilmstärke und der Kolbenkopftemperatur, der Vergleich der Meßwerte mit den Normalwerten sowie die Änderung des Profils der Kolbenseitenfläche und die Änderung der Lage der Kolbenringe bis zum Erreichen der den Normalwerten entsprechenden Meßwerte durchgeführt wird.

Zum besseren Verständnis der Erfindung werden nachfolgend konkrete Ausführungsbeispiele anhand von Zeichnungen erläutert.

Es zeigen:
Fig. 1 ein Funktionsschaltbild der Vorrichtung zum Optimieren der Bestandteile einer Zylinder-Kolben-Gruppe;
Fig. 2 eine Anordnung der Massegeber zum Messen der Ölfilmstärke;
Fig. 3 eine Veränderung der Ölfilmoberfläche.

Verfahren zum Optimieren des Profils der Kolbenseitenfläche und des minimalen Spiels zwischen dem Kolben und dem Zylinder im kalten Zustand des Motors durch Änderung des Profils der Kolbenseitenfläche bei Abweichen des charakteristischen Parameters der Zylinder-Kolben-Gruppe vom vorgegebenen Wert, bei dem unter gegebenen Betriebsbedingungen des Motors die Ölfilmstärke zwischen den Seitenflächen des Kolbens und des Zylinders, dem Zylinder und dem Kolbenring in den Schnittebenen zwischen den Haltezonen des Kolbenkopfes im äußeren Totpunkt und des Kolbenmantels im inneren Totpunkt diskret gemessen wird. Es wird die Temperatur des Kolbenkopfes gemessen, und die gemessenen Werte werden als charakteristischer Parameter verwendet. Die Abweichungen werden in bezug auf die Normalwerte für den genommenen Motortyp bestimmt.

Bei Abweichungen der Meßwerte wird zusätzlich die Lage der Kolbenringe geändert, wobei die Messung der Ölfilmstärke und der Kolbenkopftemperatur, der Vergleich der Meßwerte mit den Normalwerten sowie die Änderung des Profils der Kolbenseitenfläche und die Änderung des Profils der Lage der Kolbenringe bis zum Erreichen der den Normalwerten entsprechenden Meßwerte durchgeführt wird.

Bei Abweichen der Meßwerte der Ölfilmstärke von den Normalwerten in einer der Meßebenen wird eine Änderung der radialen Koordinaten der Außenfläche des Kolbens nach folgendem Algorithmus vorgenommen.

In den Meßebenen, in denen der innerhalb des Betriebszyklus gemessene Wert der Ölfilmstärke größer als der Normalwert ist, wird eine Vergrößerung der radialen Koordinaten der Kolbenaußenfläche um einen Übersteigungswert mit Abzug des Deformationswertes von zusammenhängenden Bauteilen, die rechnerisch ermittelt werden, durchgeführt. Wenn ein Übersteigen der Meßwerte der Normalwerte in allen Meßebenen festgestellt wird, wird das minimale Spiel zwischen Kolben und Zylinder im kalten Zustand des Motors verkleinert.

Falls in einer der Meßebenen eine Störung der Ölschmierung festgestellt wird, werden in dieser Ebene die radialen Koordinaten um den Wert vermindert, bei dem die Ölschmierung bei allen Betriebsbedingungen, d.h. im granzen Bereich der Geschwindigkeits- und Belastungswerte des Motors, gewährleistet wird. Dabei ist auch eine Änderung der Kolbenquerschnittprofile, d.h. Änderung der Kolbenovalität, möglich.

Eine Optimierung der Kolbenringlage durch Messen der Ölfilmstärke und Feststellen der Ölschmierungsstörung wird nach dem Kriterium der Wiederherstellungsdauer der Ölschmierung in Übergangszuständen des Motorbetriebes durchgeführt.

Die Lage der Kolbenringe wird so gewählt, daß die Schwankungen der Ölfilmstärke zwischen Kolben und Zylinder beim Kolbenlauf minimal bleiben.

Bei Übersteigen der Schwankungen der Ölfilmstärke der Normalwerte erfolgt die Wiederherstellung der Ölschmierung im Übergangszustand wesentlich länger, als wenn die Normalwerte nicht übertroffen werden.

Beim Optimieren der Kolbenringlage wird der Abstand zwischen dem Kolbenboden und den Ringen bei gleichbleibendem Abstand zwischen den Ringen vermindert.

Eine Verschiebung der Ringe entlang der Kolbenhöhe wird durch Messen der Kolbenkopftemperatur und deren Vergleich mit Normalwerten für den vorgegebenen Motortyp kontrolliert.

Die obengenannten Veränderungen werden insgesamt beim Fertigen eines neuen Kolbens berücksichtigt.

Die Prüfungen werden bei vorgegebenen Bedingungen wiederholt, bis die Normalwerte erreicht werden.

In jedem Prüfabschnitt werden Kraftstoffverbrauch, Ölverbrauch, Gase im Kurbelwellengehäuse, Geräusch- und Vibrationspegel, Abgasgiftigkeit gemessen.

Bei Verwendung des vorgeschlagenen Verfahrens wird die Verminderung des Kraftstoffverbrauchs, des Ölabbrandes, des Geräuschpegels und der Abgasgiftigkeit durch folgendes erreicht:
- Verkleinerung der "schädlichen", durch Kolbenkopf, den oberen Kolbenring und den Zylinder begrenzten Räume, wo das Kraftstoffverbrennen uneffektiv erfolgt;
- Verminderung der mechanischen Verluste im Motor durch beständige Ölschmierung in den Übergängen "Kolben-Zylinder" und Kolbenring-Zylinder";
- Herabsetzung der dynamischen Effekte bei radialen Bewegungen des Kolbens.

Zum Durchführen dieses Verfahrens wird ein Ölfilmstärkemesser 1 verwendet, dessen Ausgang 2 galvanisch mit einer Kathodenstrahleinheit 3 und dem Eingang 4 eines Schleifenoszillographen 5 verbunden ist.

Die Kathodenstrahleinheit 3 kann in Reihe und parallel im Schaltkreis geschaltet werden.

Ein Gerät 6 zum Registrieren der Temperatur des Kolbenkopfes des Motors 7, der mit einem Signalgeber 8 des Einlaßtaktes und einem Signalgeber 9 des äußeren Totpunktes versehen ist, ist mit dem Temperaturgeber des Kolbenkopfes verbunden.

Dabei ist der Temperaturgeber im Kolbenkopf im Bereich der Kolbennut unter dem ersten Kolbenring eingesetzt.

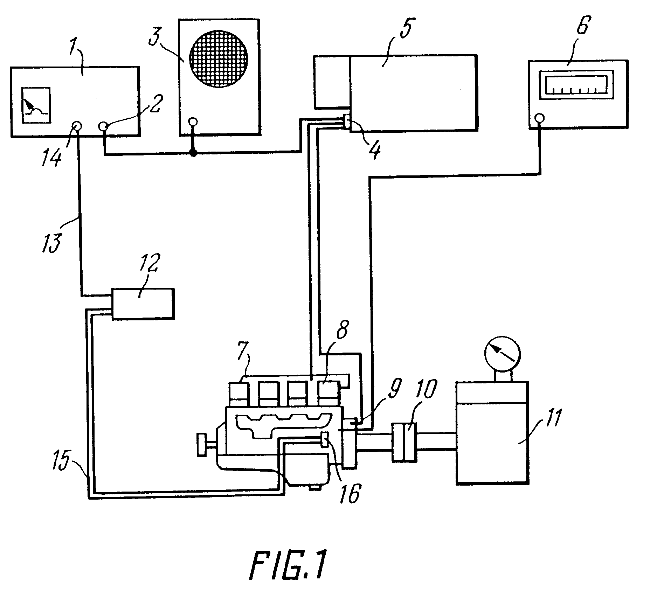

Der Motor 7 ist über eine steife Verbindung 10 mit der Bremsanlage 11 verbunden (Fig. 1).

Ein Umschalter 12 ist über einen elektrischen Kreis 13 mit einem Eingang 14 mit dem Halbleitermeßgerät 1 zum Messen der Ölfilmstärke und über einen elektrischen Kreis 15 mit einem Ölfilmstärkegeber 16 (z.B. einem kapazitiven) verbunden.

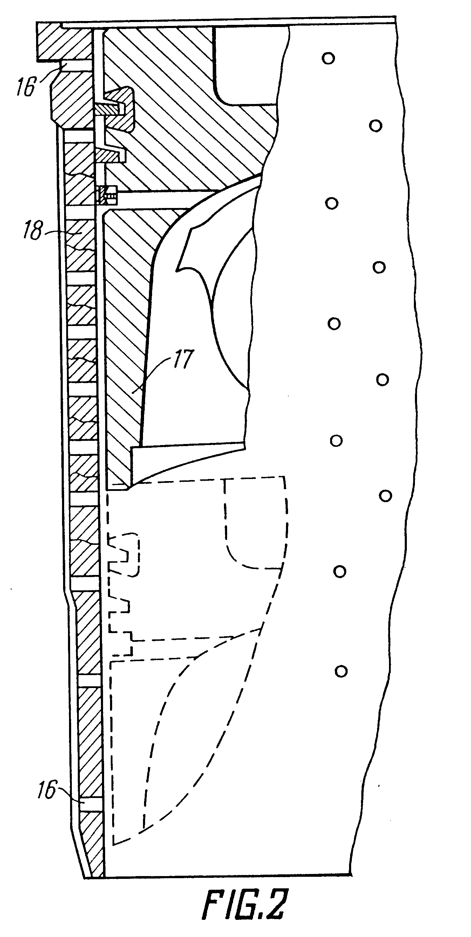

Geber 16 sind in der Zylinderbuchse 18 zwischen den Kolbenpunkten 25 angeordnet (Fig. 2).

Eine Kapazitätsänderung des Gebers 16, der in einen Hochfrequenz-Schwingungskreis geschaltet ist, ruft eine Abweichung der Generatorfrequenz vom Nomalwert f hervor. Die Kapazität des Gebers 16 hängt von der Ölfilmstärke ab, der den Raum zwischen einer Elektrode in der Zylinderbuchse 18 und dem Kolben ausfüllt.

Die Frequenz der generierten Spannung wird durch die Ölfilmstärke im Zwischenraum bestimmt. Die frequenzmodulierte Spannung vom Generator wird an einen Frequenzdemodulator und das demodulierte Signal an den Gleichstromverstärker geleitet.

Das Ölfilmstärke-Meßgerät und die Geber erlauben es, die Ölfilmstärke zu messen sowie ihr Abreißen, d.h. eine Störung der Ölschmierung, festzustellen. Eine Störung der Ölschmierung wird als einer der Normalwerte bei Optimieren der Kolbenelemente verwendet.

Das Registrieren der Vorgänge wird mit einem Schleifenoszillographen sichergestellt, der an den Ausgang des Gleichstromverstärkers geschaltet ist.

Der Zusammenhang zwischen der Ölfilmstärke und den Ausgangswerten des Meßgerätes wird an einer gesonderten Eichvorrichtung festgestellt.

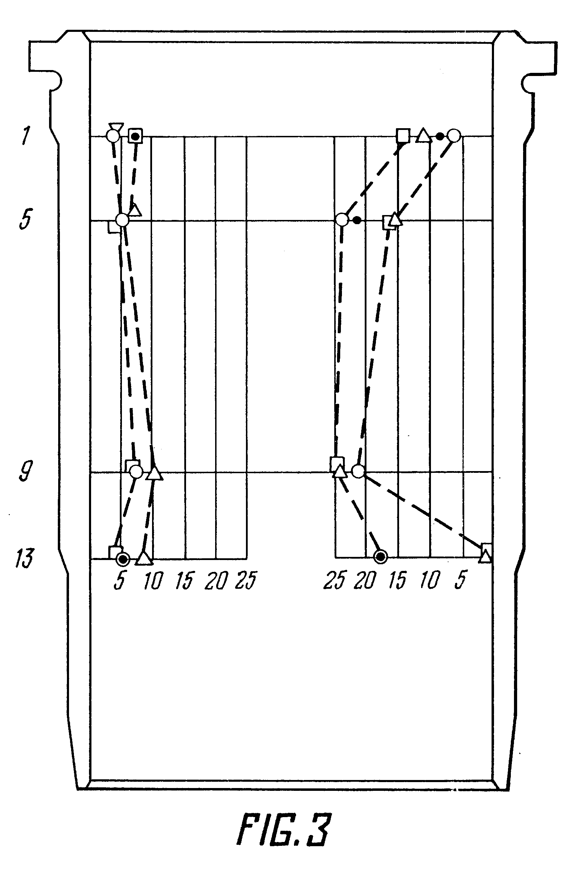

Die Veränderung der Ölfilmstärke in Schnittebenen zwischen dem äußeren und dem inneren Totpunkt ist in Fig. 3 gezeigt.

Dabei wird mit ausreichender Genauigkeit die Ölfilmstärke zwischen den Kolbenseitenflächen und dem Zylinder in verschiedenen Schnittebenen zwischen den Totpunkten und in verschiedenen Zeitabschnitten der Motorbetriebszyklen gemessen und die Betriebsbedingungen und Zeitpunkte werden festgestellt, bei denen in den untersuchten Paarungen (Kolben-Zylinder und Kolbenring-Zylinder) die Ölschmierung unterbrochen oder wiederhergestellt wird.

Untersuchungen an verschiedenen Motortypen bestätigen, daß bei Verwirklichung des vorgeschlagenen Verfahrens die wirtschaftlichen und ökologischen Kennwerte der Motoren verbessert werden. Außerdem werden die dynamischen Eigenschaften verbessert, und die Warmlaufzeit wird verkürzt.

Die vorliegende Erfindung kann eine breite Verwendung im Bereich des Motorenbaus, insbesondere LKW- und PKW-Motoren, Traktorenmotoren sowie Schiffs-, Lokomotiven- und stationären Motoren, finden.

Diese Erfindung kann bei Reparatur und Überholung der Motoren mit Austausch der Kolben, die bessere Wirtschaftlichkeit, verringerte Vibrationen, umweltfreundlichere Abgase sichern, verwendet werden.

Das Verfahren kann bei Durchführung der Qualitätsprüfungen der kompletten Motoren sowie seiner Einzelteile Kolben und Zylinderblock verwendet werden.

## Patentansprüche

1. Verfahren zum Optimieren des Profils der Kolbenseitenfläche und des minimalen Spiels zwischen dem Kolben und dem Zylinder im kalten Zustand des Motors durch Änderung des Profils der Kolbenseitenfläche bei Abweichen des charakteristischen Parameters der Kolben-Zylinder-Gruppe vom Normalwert, **dadurch gekennzeichnet,** daß bei vorgegebenen Motorbetriebsbedingungen die Ölfilmstärke zwischen den Seitenflächen des Kolbens und des Zylinders, des Zylinders und des Kolbenringes diskret in Schnittebenen zwischen Haltezonen des Kolbenoberteils im äußeren Totpunkt und des Kolbenmantels im inneren Totpunkt sowie die Temperatur des Kolbenoberteils gemessen werden und die gemessenen Werte als charakteristischer Parameter verwendet werden, die Abweichungen von Normalwerten für den gegebenen Motortyp festgestellt, bei Abweichungen der gemessenen Werte zusätzlich die Lage der Kolbenringe geändert wird, wobei ein Messen der Ölfilmstärke und der Temperatur des Kolbenoberteils, Vergleichen der Meß- und Normalwerte sowie Ändern des Profils der Kolbenseitenfläche und der Lage der Kolbenringe bis zum Erreichen der Ergebnisse, die den Normalwerten entsprechen, durchgeführt werden.
